# EUROPÄISCHE PATENTSCHRIFT

(11) **EP 3 557 111 B1**
(45) Veröffentlichungstag und Bekanntmachung des Hinweises auf die Patenterteilung: **04.11.2020**
(21) Anmeldenummer: 19169661.6
(22) Anmeldetag: 16.04.2019
(51) Int. Cl.: F16M 7/00, F16M 11/18

(54) **POSITIONIEREINRICHTUNG FÜR ALIGNMENTS SCHWERER ANLAGENKOMPONENTEN**
POSITIONING DEVICE FOR ALIGNMENTS OF HEAVY COMPONENTS
DISPOSITIF DE POSITIONNEMENT PERMETTANT L'ALIGNEMENT DE COMPOSANTS D'INSTALLATION PLUS LOURDS

(30) Priorität: 16.04.2018 DE 102018109004
(43) Veröffentlichungstag der Anmeldung: 23.10.2019
(73) Patentinhaber: Deutsches Elektronen-Synchrotron DESY, 22607 Hamburg (DE)
(72) Erfinder: Saemann, Ernst-Otto, 21401 Thomasburg (DE)
(74) Vertreter: Bird & Bird LLP

(56) Entgegenhaltungen:
- US-A- 3 849 857

## Beschreibung

Die vorliegende Erfindung betrifft eine Positioniereinrichtung zur Positionierung von schweren Komponenten.

Unterschiedlichste Anlagenkomponenten, wie beispielsweise Beschleunigerkomponenten und insbesondere strahlmanipulierende oder strahllagebestimmende Komponenten wie Magnete, Beampositionsmonitore, Undulatoren usw., müssen bei Beschleunigeranlagen sowie in vielen anderen Bereichen mit hoher Präzision justiert und wechselnden Bedingungen angepasst werden. Beim in-situ-Alignment ist es unter Umständen erforderlich, alle sechs Freiheitsgrade zu bedienen. Daher werden Positioniereinrichtungen benötigt, die es ermöglichen, die Position von Anlagenkomponenten in einfacher Weise neu einzustellen.

Häufig ergibt sich die Problematik, dass Komponenten mit großer Masse an schwer zugänglichen Stellen während des Betriebes ohne Zugangsmöglichkeit positioniert werden müssen.

Aus dem Stand der Technik sind zum einen sogenannte Hexapods bekannt, bei denen die Position einer Aufnahmeplatte, auf der ein zu positionierendes Element angebracht ist, relativ zu einer Basisplatte durch Verstellen der Länge von Verbindungsstreben zwischen der Basisplatte und der Aufnahmeplatte eingestellt werden kann. Derartige Hexapods sind aber bauartbedingt wenig kompakt und beim angestrebten Downsizing nicht geeignet, hohe Lasten bei geringem Bauraum zu positionieren.

Ferner sind Positioniertische bekannt, die aber nur eine Einstellung einer Position entlang zweier Achsen und damit kombiniert keine Drehbewegungen zulassen, sodass auch derartige Einrichtungen nicht für den gewünschten Zweck geeignet sind. US 3849857 offenbart z.B. eine bekannte Positioniereinrichtung.

Daher ist es ausgehend vom Stand der Technik die Aufgabe der vorliegenden Erfindung, eine Positioniereinrichtung bereitzustellen, mit der die Position von Bauteilen mit großem Gewicht linear sowie durch eine Rotationsbewegung verändert werden können, wobei die Einrichtung kompakt aufgebaut ist.

Diese Aufgabe wird durch eine Positioniereinrichtung gelöst mit fünf Modulen, wobei sich die Module in parallel zueinander verlaufenden Modulebenen erstrecken,
wobei sich eine x-Richtung und eine y-Richtung senkrecht zueinander in den Modulebenen erstrecken und sich eine z-Richtung senkrecht zu den Modulebenen erstreckt,
wobei die Module in z-Richtung übereinander angeordnet sind,
wobei ein erstes Paar aus Modulen, die sich unmittelbar aneinander abstützen, direkt derart beweglich miteinander gekoppelt sind, sodass das erste Modul aus dem ersten Paar gegenüber dem zweiten Modul aus dem ersten Paar entlang dreier parallel zur z-Richtung verlaufender und in einem Dreieck angeordneter erster Verstellachsen unabhängig verschoben werden kann,
wobei ein zweites Paar aus Modulen, die sich unmittelbar aneinander abstützen, direkt derart beweglich miteinander gekoppelt sind, sodass das erste Modul aus dem zweiten Paar gegenüber dem zweiten Modul aus dem zweiten Paar entlang der y-Richtung verschiebbar ist,
wobei ein drittes Paar aus Modulen, die sich unmittelbar aneinander abstützen, direkt derart beweglich miteinander gekoppelt sind, sodass das erste Modul aus dem dritten Paar gegenüber dem zweiten Modul aus dem dritten Paar entlang der y-Richtung verschiebbar ist,
wobei ein viertes Paar aus Modulen, die sich unmittelbar aneinander abstützen, direkt derart beweglich miteinander gekoppelt sind, sodass das erste Modul aus dem vierten Paar gegenüber dem zweiten Modul aus dem vierten Paar um die z-Achse verschwenkbar ist, und
wobei die Paare aus Modulen sich voneinander unterscheiden.

Bei dem erfindungsgemäßen Aufbau einer Positioniereinrichtung sind demnach zumindest fünf in einer z-Richtung übereinander angeordnete Module vorgesehen, wobei unmittelbar benachbarte Module in der im Folgenden noch beschriebenen Weise miteinander gekoppelt sind. Das unterste Modul kann mit seiner von dem darüber liegenden weiteren Modul wegweisenden Seite an einer Montagefläche befestigt werden, während das oberste Modul die zu positionierende Beschleunigerkomponente tragen kann.

Durch die sich in Modulebenen erstreckenden Module können Raumrichtungen in der Weise festgelegt werden, dass sich die x- und y-Richtung parallel zu den Modulebenen erstrecken und die z-Richtung senkrecht zu diesen Ebenen.

Bei dem erfindungsgemäßen Aufbau sind jeweils Paare unmittelbar benachbarter Module sind nun wie folgt beweglich gekoppelt:
Ein erstes Paar aus Modulen, die sich unmittelbar aneinander abstützen, sind so derart beweglich miteinander gekoppelt, sodass das erste Modul aus diesem Paar gegenüber dem zweiten Modul entlang dreier parallel zur z-Richtung verlaufender und in einem Dreieck angeordneter erster Verstellachsen unabhängig verschoben werden kann. Durch getrenntes Verstellen der Relativposition entlang der drei Verstellachsen sind zum einen Schwenkbewegungen der Beschleunigerkomponente um die x- und die y-Richtung möglich. Darüber hinaus kann durch eine parallele Verstellung entlang der drei Achse eine gradlinige Verstellung in z-Richtung erfolgen.

Ein zweites Paar aus Modulen, die sich unmittelbar aneinander abstützen, sind direkt derart beweglich miteinander gekoppelt, dass das erste Modul aus dem zweiten Paar gegenüber dem zweiten Modul entlang der y-Richtung verschiebbar ist. Hierdurch kann eine Verschiebung der Beschleunigerkomponente in der x-Richtung realisiert werden.

Ein drittes Paar aus Modulen, die sich wiederum unmittelbar aneinander abstützen, sind direkt beweglich miteinander gekoppelt, dass das erste Modul aus dem dritten Paar gegenüber dem zweiten Modul entlang der x-Richtung verschiebbar ist, damit Verschiebungen der Beschleunigerkomponente entlang der x-Richtung realisiert werden können.

Schließlich stützen sich ein viertes Paar aus Modulen derart unmittelbar aneinander ab und sind derart beweglich miteinander gekoppelt, dass das erste Modul aus dem vierten Paar gegenüber dem zweiten Modul um die z-Achse verschwenkbar ist, damit auch eine Drehung der Beschleunigerkomponente um die z-Richtung möglich ist.

In welche Reihenfolge die zuvor beschriebenen Paare zwischen obersten und dem untersten Modul angeordnet sind, kann bei der vorliegenden Erfindung offen bleiben. Daher ist der erfindungsgemäße Aufbau außerordentlich flexibel.o

In jedem Fall werden bei dem erfindungsgemäßen Aufbau sowohl translatorische Bewegungen entlang der drei Raumrichtungen als auch rotatorische Bewegungen um diese Richtungen ermöglicht. Der Aufbau aus übereinander angeordneten, sich in Ebenen erstreckenden Modulen ermöglicht eine kompakte Bauweise. Darüber hinaus können auch große Lasten von der erfindungsgemäßen Vorrichtung aufgenommen werden.

In einer bevorzugten Ausführungsform sind an dem ersten Modul aus dem ersten Paar drei sich in z-Richtung erstreckende, bezüglich des ersten Moduls aus dem ersten Paar entlang der z-Richtung verstellbare Stempel vorgesehen, die sich am zweiten Modul des ersten Paares abstützen. Gerade ein solcher Aufbau ermöglicht die Aufnahme großer Lasten in z-Richtung bei gleichzeitiger Verstellbarkeit in dieser Richtung, da die Last von den Stempeln aufgenommen wird.

Insbesondere können bei dieser Ausführungsform in dem ersten Modul aus dem ersten Paar drei sich in der Modulebene in einer Erstreckungsrichtung erstreckende Positionierstempel vorgesehen sein, die in der Modulebene entlang ihrer Erstreckungsrichtung verstellbar sind, wobei jedem Positionierstempel ein Stempel zugeordnet ist, sodass drei Paare aus einem Stempeln und einem Positionierstempel gebildet werden, und wobei Enden des Positionierstempels und des Stempels aus einem Paar aneinander anliegen und die anliegenden Enden zur Erstreckungsrichtung des Positionierstempels und des Stempels geneigte Schrägflächen aufweisen. Wenn die Positionierstempel verschoben werden, gleiten deren geneigte Endflächen auf den geneigten Endflächen der Stempel, sodass diese sich entweder hin zu dem ersten Modul oder von diesem weg bewegen. Durch Verfahren der Positionierstempel werden die Stempel damit relativ zu dem ersten Modul verfahren, wobei durch die rechtwinklige Anordnung von Stempeln und Positionierstempeln aber erreicht wird, dass im Ruhezustand nur geringe Lasten von der Antriebseinrichtung für die Positionierstempel aufgenommen werden müssen. Vielmehr ist die Anordnung selbsthemmend.

Hierbei ist es weiter bevorzugt, wenn erste Gewindespindeln vorgesehen sind und jeder Positionierstempel mit einer sich parallel zu der Erstreckungsrichtung des Positionierstempels erstreckenden ersten Gewindespindel eingreift. Dann können die Positionierstempel durch Verdrehen der jeweiligen Gewindespindel separat verfahren werden. Wenn die Verstellung der Position der Beschleunigerkomponente motorisch erfolgen soll, ist es weiter bevorzugt, wenn die ersten Gewindespindeln mit einem Drehantrieb, beispielsweise in Form eines Elektromotors und insbesondere eines Schrittmotors, verbunden sind.

In bevorzugter Weise erstrecken sich die Positionierstempel parallel zueinander entlang der x-Richtung. Dies ermöglicht das Anbringen der Antriebseinrichtungen für die Positionierstempel in einer Ebene senkrecht zu x-Richtung.

Weiterhin ist es bevorzugt, wenn das erste Modul aus dem zweiten Paar eine sich parallel zu oder in einem Winkel kleiner 90° zu der y-Richtung erstreckende erste Führungsbahn aufweist, wobei in der ersten Führungsbahn ein erster Führungsblock verschiebblich geführt ist, wobei der erste Führungsblock in einer zweiten Führungsbahn geführt ist, die in dem zweiten Modul des zweiten Paares ausgebildet ist und die senkrecht zu oder in einem Winkel größer als 0° zu der y-Richtung verläuft, und wobei Antriebsmittel zur Bewegung des ersten Führungsblocks entlang der zweiten Führungsbahn vorgesehen sind. Bei diesem Aufbau kann durch eine einfache Verschiebung des ersten Führungsblocks mittels der vorgesehenen Antriebsmittel eine Bewegung in y-Richtung realisiert werden.

Insbesondere kann eine zweite Gewindespindel vorgesehen sein, die sich in dem zweiten Modul des zweiten Paares in der Modulebene parallel zur Erstreckungsrichtung der zweiten Führungsbahn erstreckt und die mit dem ersten Führungsblock in Gewindeeingriff steht. Dann kann die Verschiebebewegung des ersten Führungsblocks einfach durch eine Drehung der Gewindespindel bewirkt werden. Dabei kann in weiter bevorzugter Weise die zweite Gewindespindel mit einem Drehantrieb, beispielsweise in Form eines Elektromotors und insbesondere eines Schrittmotors, verbunden sein.

Um auch hier zu ermöglichen, dass die Antriebe einheitlich in einer Ebene senkrecht zur x-Richtung angeordnet werden können, ist es bevorzugt, wenn sich die zweite Führungsbahn parallel zu der x-Richtung erstreckt.

Weiterhin ist es bevorzugt, wenn das erste Modul aus dem dritten Paar eine sich parallel zu der x-Richtung erstreckende dritte Führungsbahn aufweist, wobei in der dritten Führungsbahn ein zweiter Führungsblock verschiebblich geführt ist, wobei der zweite Führungsblock mit dem zweiten Modul des dritten Paares eingreift und wobei Antriebsmittel zur Bewegung des zweiten Führungsblocks entlang der dritten Führungsbahn vorgesehen sind. Mit diesem Aufbau kann auf einfache Weise eine Verstellung der Beschleunigerkomponente in x-Richtung realisiert werden. Dabei ist es weiter bevorzugt, wenn eine dritte Gewindespindel vorgesehen ist, die sich in dem ersten Modul des dritten Paares in der Modulebene parallel zur Erstreckungsrichtung der dritten Führungsbahn erstreckt und die mit dem zweiten Führungsblock in Gewindeeingriff steht. Damit kann die Verstellung in x-Richtung durch eine Drehbewegung erreicht werden. Hierzu kann in noch weiter bevorzugter Weise ein Drehantrieb, beispielsweise in Form eines Elektromotors und insbesondere eines Schrittmotors, eingesetzt werden. Der Drehantrieb kann dabei an dem ersten Modul des dritten Paares gehaltert sein.

Um eine Drehbewegung der Beschleunigerkomponente um die z-Achse zu erreichen, kann in einer bevorzugten Ausführungsform das erste Modul des vierten Paares mit dem zweiten Modul des vierten Paares um eine parallel zur z-Richtung verlaufende Schwenkachse schwenkbar verbunden sein, wobei das erste Modul des vierten Paares eine sich gradlinig erstreckende vierte Führungsbahn aufweist, die in der x-Richtung und der y-Richtung von der Schwenkachse beabstandet ist und in der ein dritter Führungsblock verschieblich geführt ist, wobei der dritte Führungsblock mit dem zweiten Modul des vierten Paares eingreift und wobei Antriebsmittel zur Bewegung des dritten Führungsblocks entlang der vierten Führungsbahn vorgesehen sind. Hierbei bewirkt eine durch das Antriebsmittel bewirkte Linearbewegung des dritten Führungsblocks, der mit dem zweiten Modul des vierten Paares eingreift, dann die Drehbewegung der Beschleunigerkomponente um die z-Richtung.

In weiter bevorzugter Weise kann eine vierte Gewindespindel vorgesehen sein, die sich in dem ersten Modul des vierten Paares in der Modulebene parallel zur Erstreckungsrichtung der vierten Führungsbahn erstreckt und die mit dem dritten Führungsblock in Gewindeeingriff steht. Dies ermöglicht wieder, einen Drehantrieb, beispielsweise in Form eines Elektromotors und insbesondere eines Schrittmotors, einzusetzen. Der Drehantrieb kann dabei bevorzugt an dem ersten Modul des vierten Paares gehaltert sein.

Um wiederum zu erreichen, dass auch hier der Antrieb in einer mit den anderen Antrieben gemeinsamen Ebene senkrecht zu x-Richtung angeordnet ist, kann sich die vierte Führungsbahn parallel zu der x-Richtung erstrecken.

Im Folgenden wird die vorliegende Erfindung anhand einer lediglich ein bevorzugtes Ausführungsbeispiel zeigenden Zeichnung beschrieben, wobei
- Fig. 1: eine perspektivische Darstellung des Ausführungsbeispiels einer erfindungsgemäßen Positioniereinrichtung zusammen mit einer Strahlfokussiereinrichtung ist,
- Fig. 2: eine perspektivische Darstellung der Positioniereinrichtung aus Fig. 1 ist,
- Fig. 3: eine Explosionsdarstellung der Positioniereinrichtung aus Fig. 1 ist,
- Fig. 4: ein Längsschnitt in der x-z-Ebene durch die Positioniereinrichtung gemäß Fig. 1 ist und
- Fig. 5: eine perspektivische Teilansicht der Positioniereinrichtung aus Fig. 1 ist.

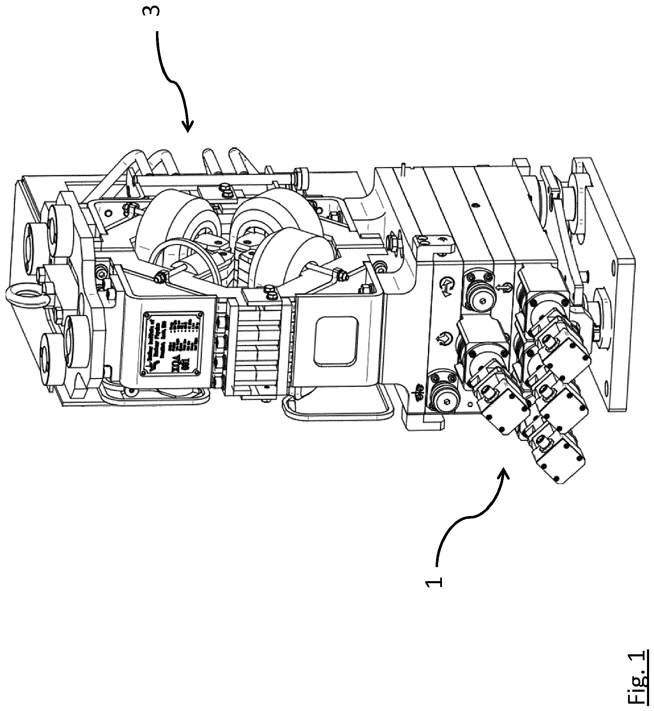

Figur 1 zeigt ein Ausführungsbeispiel einer Positioniereinrichtung 1 gemäß der vorliegenden Erfindung, wobei die Positioniereinrichtung 1, wie in Fig. 1 gezeigt, dazu vorgesehen ist, eine Beschleunigerkomponente in Form einer Fokussiereinrichtung 3, die als magnetische Linse ausgebildet ist, zu haltern. Die vorliegende Erfindung ist aber nicht darauf beschränkt, mit Beschleunigerkomponenten verwendet zu werden, sondern kann allgemein zum Positionieren schwerer Komponenten eingesetzt werden.

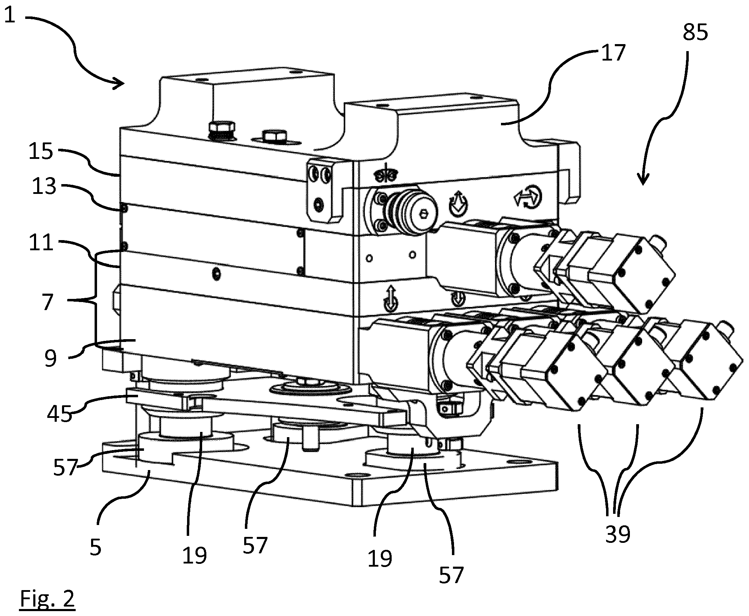

Wie weiter in den Figuren 1 und 2 zu entnehmen ist, weist das Ausführungsbeispiel einer Positioniereinrichtung ein erstes Modul 5 auf, das als Basismodul 5 ausgebildet ist und das an einer Stützeinrichtung wie einem Gestell ortsfest montiert werden kann. Unmittelbar an dem Basismodul 5 stützt sich ein zweites Modul 7 ab, das in diesem bevorzugten Ausführungsbeispiel aus einem ersten Plattenelement 9 und einem zweiten Plattenelement 11 zusammengesetzt ist. Sowohl das Basismodul 5 als auch das zweite Modul 7 sind dabei derart ausgebildet, dass sie sich in parallel zueinander verlaufenden Modulebenen erstrecken. An dem zweiten Modul 7 bzw. an dem zweiten Plattenelement 11 stützt sich wiederum direkt ein drittes Modul 13 ab, das ebenfalls plattenförmig ausgebildet ist und sich auch in einer Modulebene erstreckt, die parallel zu den Ebenen der anderen Module 5, 7 verläuft.

Auf der von dem zweiten Modul 7 abgewandten Seite des dritten Moduls 13 ist ein viertes Modul 15 vorgesehen, das wiederum direkt mit dem dritten Modul 13 gekoppelt ist und das sich ebenfalls in einer Modulebene erstreckt, die parallel zu den Modulebenen der anderen Module 5, 7, 13 ist. Oberhalb und auf der von dem dritten Modul 13 abgewandten Seite des vierten Moduls 15 ist ein fünftes (Kopplungs-)Modul 17 vorgesehen, das direkt mit dem vierten Modul 15 gekoppelt ist und an dem in diesem Fall eine Beschleunigerkomponente, d.h. die Fokussiereinrichtung 13, befestigt ist.

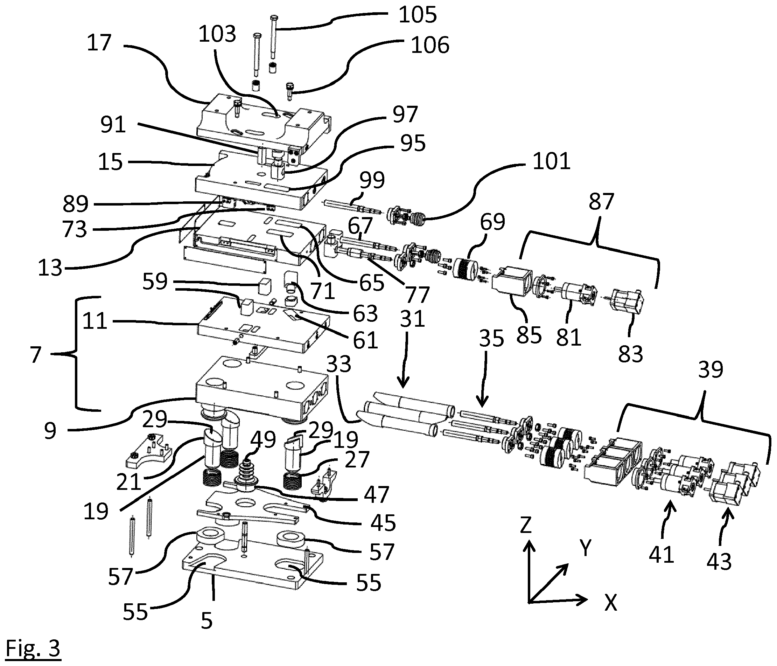

Durch die plattenförmig ausgebildeten Module 5, 7, 13, 15, 17 und die dadurch festgelegten Modulebenen wird ein Koordinatensystem in der Weise festgelegt, dass die x- und y-Richtung senkrecht zueinander und parallel zu den Modulebenen bzw. den plattenförmig ausgebildeten Modulen 5, 7, 13, 15, 17 verlaufen, während sich die z-Richtung senkrecht zu den Modulebenen erstreckt (siehe Koordinatensystem in Figur 3). Daraus ergibt sich, dass die Module 5, 7, 13, 15, 17 entlang der z-Richtung übereinander angeordnet sind, wobei das Basismodul 5 das unterste Modul ist und das Kopplungsmodul 17 das oberste.

Die Module 5, 7, 13, 15, 17 sind in der im folgenden beschriebenen Weise miteinander gekoppelt, um translatorische Bewegungen relativ zu den x-, y-, und z-Richtungen sowie Rotationsbewegungen relativ zu diesen ausgeführt von dem Kopplungsmodul 17 zu ermöglichen. Dies wird durch den folgenden Aufbau ermöglicht.

In dem vorliegenden bevorzugten Ausführungsbeispiel bilden das Basismodul 5 und das zweite Modul 7 ein erstes Paar von Modulen, die direkt miteinander gekoppelt sind und sich unmittelbar aneinander abstützen, wie die aus Figur 3 zu erkennen ist. Dabei bildet das Basismodul 5 das erste Modul dieses ersten Paares und das zweite Modul 7 ist auch das zweite Modul dieses ersten Paares.

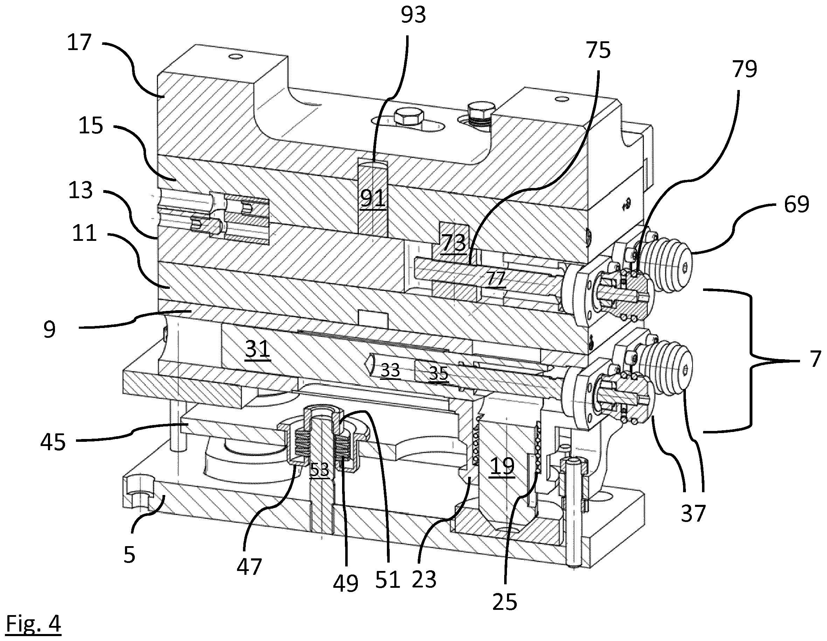

Dazu sind an dem ersten Plattenelement 9 des zweiten Moduls 7 drei Stempel 19 parallel zu der z-Richtung verschiebbar gehaltert, wobei die Stempel 19 in der Modulebene des zweiten Moduls 7 in einem Dreieck angeordnet sind und einen Kragen 21 aufweisen, an dem sich der Durchmesser des Stempels 19 von einem ersten Durchmesser auf einen zweiten Durchmesser verringert. Wie Figur 4 zeigt, sind die Stempel 19 in einem Gehäuseabschnitt 23 am ersten Plattenelement 9 geführt, wobei am freien Ende des Gehäuseabschnitts 23 entfernt von dem ersten Plattenelement 9 eine Stufe 25 vorgesehen ist. Federelemente 27 stützen sich an der Stufe 25 sowie dem Kragen 21 ab, sodass die Stempel 19 aufgrund der Vorspannung der Federelemente 27 hin zu dem ersten Plattenelement 9 gedrückt werden.

Die oberen, in dem ersten Plattenelement 9 aufgenommenen Enden der Stempel 19 weisen Schrägflächen 29 auf, die in diesem bevorzugten Ausführungsbeispiel unter einem Winkel von 26,56° zur z-Richtung oder damit zu der von der x-Richtung und y-Richtung aufgespannten Ebene verlaufen.

Des Weiteren sind in dem ersten Plattenelement 9 des zweiten Moduls 7 drei Positionierstempel 31 parallel zur x-Richtung oder allgemein in der von der x-Richtung und y-Richtung aufgespannten Ebene in entsprechend ausgebildeten Bohrungen verschiebbar geführt, wobei die Positionierstempel 31 ebenfalls an die Schrägflächen 29 angepasste Schrägflachen 33 aufweisen, und jeweils ein Positionierstempel 31 mit einem Stempel 29 ein Paar bildet, bei dem die Schrägflächen 29, 33 aneinander anliegen.

Darüber hinaus weisen die Positionierstempel 31, wie in Figur 4 zu erkennen ist, sich axial erstreckende Gewindebohrungen 33 auf. Wie des Weiteren aus den Figuren 3 und 4 zu erkennen ist, sind in dem ersten Plattenelement 9 an der in x-Richtung weisenden Seite Gewindespindeln 35 drehbar aber axial unbeweglich gehaltert, wobei die nach Außen weisenden Enden der Gewindespindeln 35 mit einem Eingriffselement 37 versehen sind, wobei ein Eingriffselement 37 jeweils drehfest mit der zugeordneten Gewindespindel 35 gekoppelt ist. Die Gewindespindeln 35 greifen jeweils mit einem Bolzengewinde einer Gewindebohrung 33 in einem Positionierstempel 31 ein, sodass der jeweilige Positionierstempel 31 durch Drehen der Gewindespindel 35 entlang der x-Richtung verschoben werden kann. Eine solche Verschiebebewegung des Positionierstempels 31 führt dazu, dass der mit diesem Positionierstempel 31 über die Schrägflächen 29, 33 gekoppelte Stempel 19 entweder hin zu dem Basismodul 5 oder davon weg bewegt wird. Da die Stempel 19 dreiecksförmig in dem ersten Plattenelement 9 angeordnet sind und die Stempel 19 individuell über die Eingriffselemente 37 einstellbar sind, kann auf diese Weise durch geeignete Wahl der Verstellung der Gewindespindeln 35 das zweite Modul 7 gegenüber dem Basismodul 5 einerseits translatorisch entlang der z-Richtung verfahren werden und andererseits eine Schwenkbewegung sowohl um die x- Richtung als auch um die y-Richtung ausführen.

In dem hier beschriebenen bevorzugten Ausführungsbeispiel sind die Eingriffselemente 37 gekoppelt mit einem Drehantrieb 39, der jeweils ein Getriebe 41 und einen Schrittmotor 43 aufweist. Damit kann die Position der Positionierstempel 31 und damit die der Stempel 19 motorisch über die Drehantriebe 39 vorgenommen werden. Die Drehantriebe 39 sind dabei an dem ersten Plattenelement 9 und damit an dem zweiten Modul 7 angebracht.

Wie weiterhin aus Figuren 3 und 4 zu erkennen ist, ist an den Gehäuseabschnitten 23 eine Druckplatte 45 gehaltert, wobei diese in z-Richtung gegenüber dem ersten Plattenelement 9 festgelegt ist, da sie mit Nuten am freien Ende der Gehäuseabschnitte 23 eingreift. In der Druckplatte 45 ist eine Hülse 47 in einer Bohrung aufgenommen, wobei die Hülse 47 mit einem Kragen auf der zu dem ersten Plattenelement 9 weisenden Seite der Druckplatte 45 anliegt, sodass sie nicht nach unten hin zu dem Basismodul 5 bewegt werden kann. In der Hülse 27 ist eine Tellerfederanordnung 49 vorgesehen, die einerseits am Boden der Hülse 47 anliegt und andererseits an einer Mutter 51, die auf einen Bolzen 53 aufgeschraubt ist, der wiederum in das Basismodul 5 eingeschraubt ist.

Durch diesen Aufbau aus einem Tellerfederpaket 49 und dem Bolzen 53 wird das zweite Modul 7 hin zu dem Basismodul 5 vorgespant, und bei einer Verstellung des zweiten Moduls 7 relativ zu dem Basismodul 5 durch Verfahren der Stempel 19 muss gegen die Federkraft des Tellerfederpakets 49 gearbeitet werden, wenn der Abstand zwischen diesen Modulen 5, 7 vergrößert werden soll. Dies stellt auf der anderen Seite aber sicher, dass die Module 5, 7 unmittelbar ohne Spiel aneinander anliegen.

Schließlich ist in Figuren 2 und 3 zu erkennen, dass in dem Basismodel 5 Vertiefungen 55 ausgebildet sind, in denen Aufnahmeplatten 57 verschieblich geführt sind. Die Aufnahmeplatten 57 nehmen die freien Enden der Stempel 19 auf, sodass diese sich entlang der durch die Vertiefungen 55 definierten Bahnen relativ zu dem Basismodul 5 bewegen können, wenn eine Bewegung durch Verstellen der Positionierstempel 31 bewirkt wird.

Das zweite Modul 7 und das dritte Modul 13 bilden ein zweites Paar von Modulen, wobei in diesem zweiten Paar das zweite Modul 7 das erste Modul bildet, und das dritte Modul 13 das zweite Modul des zweiten Paares darstellt.

In dem zweiten Plattenelement 11 bzw. dem zweiten Modul 7 sind zwei Führungselemente 59 eingelegt, die sich nach oben hin zu dem dritten Modul 13 erstrecken und dort in in y-Richtung verlaufenden Nuten (nicht dargestellt) geführt sind. Durch die Führungselemente 59, die in Eingriff mit den Nuten sind, wird festgelegt, dass sich das dritte Modul 13 relativ zu dem zweiten Plattenelement 11 und damit dem zweiten Modul 7 nur entlang der y-Richtung verschieben kann.

Des Weiteren ist in dem zweiten Plattenelement 11 des zweiten Moduls 7 eine erste Führungsbahn 61 vorgesehen, die sich in diesem Ausführungsbeispiel unter einem Winkel von 45° relativ zu der x-Richtung erstreckt. Hier sind aber auch andere Neigungswinkel denkbar. Gleichzeitig schließt die erste Führungsbahn 61 hier einen Winkel von 45° mit der y-Richtung ein. In der ersten Führungsbahn 61 ist ein erster Führungsblock 63 geführt, der sich in eine zweite Führungsbahn 65 erstreckt, die in dem dritten Modul 13 ausgebildet ist und parallel zu der x-Richtung verläuft. Der erste Führungsblock 63 weist eine Gewindebohrung (nicht dargestellt) auf, die mit einer zweiten Gewindespindel 67 eingreift, die drehbar aber axial unverschiebbar im dritten Modul 13 gehaltert ist, wobei an deren Ende, das sich in der x-Richtung aus dem dritten Modul 13 herauserstreckt, ein Eingriffselement 69 angebracht ist, sodass durch Drehen des Eingriffselements 69 die damit verbundene zweite Gewindespindel 67 verdreht werden kann, was zu einer Verschiebung des ersten Führungsblocks 63 entlang der zweiten Führungsbahn 65 führt. Eine solche Bewegung wiederum führt dazu, dass das dritte Modul 13 relativ zu dem zweiten Modul 7 bzw. zu dem zweiten Plattenelement 11 entlang der y-Richtung verschoben wird, da die erste Führungsbahn 61 geneigt zu der zweiten Führungsbahn 65 verläuft und der erste Führungsblock 63 gradlinig geführt ist. Die Bewegung entlang der y-Richtung wird dabei durch die ersten Führungselemente 59 festgelegt.

Das Eingriffselement 69 auf der zweiten Gewindespindel 67 kann mit einem Getriebe und einem Schrittmotor, die nicht dargestellt sind, gekoppelt sein, sodass auch die Bewegung letztlich des Kopplungsmoduls 17 entlang der y-Richtung motorisch mittels eines durch das Getriebe und dem Schrittmotor gebildeten Drehantriebs bewirkt werden kann. Dabei kann auch dieser Drehantrieb an einer in einer x-Richtung weisenden Seite des dritten Moduls 13 vorgesehen sein.

Das dritte Modul 13 und das vierte Modul 15 bilden ein drittes Paar von Modulen, wobei das erste Modul aus dem dritten Paar das dritte Modul 13 ist, während das das zweite Modul aus den dritten Paar das vierte Modul 15 ist.

Wie die Figuren 3 und 4 zeigen, ist in dem dritten Modul 13 eine dritte Führungsbahn 71 ausgebildet, die sich parallel zu der x-Richtung erstreckt und in der ein zweiter Führungsblock 73 verschiebbar geführt ist. Der zweite Führungsblock 73 weist eine Gewindebohrung 75 auf, die mit einer dritten Gewindespindel 77 in Eingriff steht, die wiederum drehbar aber axial unverschieblich im dritten Modul 13 gehaltert ist. Das freie, sich in x-Richtung über das Ende des dritten Moduls 13 hinaus erstreckende Ende der dritten Gewindespindel 77 ist mit einem Eingriffselement 79 versehen, über das die dritte Gewindespindel 77 verdreht werden kann. Wie weiter aus Figur 3 zu erkennen ist, ist das Eingriffselement 79 an der dritten Gewindespindel 77 mit einem Getriebe 81 und einem Schrittmotor 83 gekoppelt, wobei das Getriebe 81 in einem Getriebegehäuse 85 aufgenommen ist. Das Getriebegehäuse 85, das Getriebe 81 und der Schrittmotor 83 bilden einen Drehantrieb 87, so dass die dritte Gewindespindel 77 motorisch angetrieben werden kann, was zu einer Verschiebung des zweiten Führungsblocks 73 entlang der dritten Führungsbahn 71 führt. Der zweite Führungsblock 73 ist mit seinem oberen, zum vierten Modul 15 weisenden Ende mit diesem in Eingriff, sodass bei einer Bewegung des zweiten Führungsblocks 73 entlang der dritten Führungsbahn 71 das vierte Modul 15 entlang der x-Richtung verschoben wird. Um sicherzustellen, dass diese Bewegung gradlinig und kontrolliert erfolgt, ist in das dritte Modul 13 ein Führungselement 89 eingelassen, das in einer Nut in der zu dem dritten Modul 13 weisenden Seite in dem vierten Modul 15 geführt ist, die sich ebenfalls in x-Richtung erstreckt.

Das vierte Modul 15 und das Kopplungsmodul 17 bilden ein viertes Paar von direkt miteinander gekoppelten und aneinander anliegenden Modulen, wobei im vierten Paar das vierte Modul 15 das erste Modul bildet, während das Kopplungsmodul 17 das zweite Modul des vierten Paares darstellt.

Aus den Figuren 3 und 4 ist zu entnehmen, dass in das vierte Modul 15 ein Drehzapfen 91 eingelassen ist, der in einer Bohrung 93 in dem Kopplungsmodul 17 aufgenommen ist. Dadurch ist das Kopplungsmodul 17 relativ zu dem vierten Modul 15 um die z-Richtung drehbar gehaltert.

Des Weiteren weist das vierte Modul 15 eine sich in diesem bevorzugten Ausführungsbeispiel entlang der x-Richtung erstreckenden vierte Führungsbahn 95 auf, die sowohl in x-Richtung als auch in y-Richtung von dem Drehzapfen 91 und damit der Drehachse des Kopplungsmoduls 17 beabstandet ist. In der vierten Führungsbahn 95 ist ein dritter Führungsblock 97 verschiebbar geführt, wobei der dritte Führungsblock 97 eine nicht dargestellte Gewindebohrung aufweist, sodass er mit einer vierten Gewindespindel 99 eingreift, die drehbar aber axial unverschiebbar in dem vierten Modul 15 gehaltert ist. Die vierte Gewindespindel 99 weist an ihrem freien, sich in x-Richtung über das vierte Modul 15 hinaus erstreckende Ende ein Eingriffselement 101 auf, sodass die vierte Gewindespindel 99 entweder händisch oder von einem nicht dargestellten Drehantrieb verdreht werden kann.

Ein derartiges Verdrehen der vierten Gewindespindel 99 bewirkt eine Bewegung des dritten Führungsblocks 97 entlang der vierten Führungsbahn 95. Das obere Ende des dritten Führungsblocks 97 greift mit einer Vertiefung in der zu dem vierten Modul 15 weisenden Fläche am Kopplungsmodul 17 ein. Da das Kopplungsmodul 17 über den Drehzapfen 91 drehbar mit dem vierten Modul 15 gekoppelt ist, bewirkt ein Verschieben des dritten Führungsblocks 97 in der vierten Führungsbahn 95 ein Verdrehen des Kopplungsmoduls 17 um die z-Richtung relativ zu dem vierten Modul 15. Ist das Eingriffselement 101 mit einem Drehantrieb, der beispielsweise einen Schrittmotor aufweisen kann, verbunden, kann auch diese Drehbewegung motorisch bewirkt werden.

Wie schließlich aus Figur 3 zu erkennen ist, sind in dem Kopplungsmodul 17 zwei bogenförmige Schlitze 103 vorgesehen, durch die sich Bolzen 105 in das darunter angeordnete vierte Modul 15 und das dritte Modul 13 erstrecken. Dadurch, dass die Bolzen 105 in den bogenförmigen Schlitzen 103 geführt sind, wird der maximale Umfang der Drehbewegung des Kopplungsmoduls 17 relativ zu dem vierten Modul 15 begrenzt. Durch die mit Tellerfedern unterlegten Bolzen 105, 106 werden die Module 13, 15, 17 gegeneinander vorgespannt und gegen Abheben gesichert.

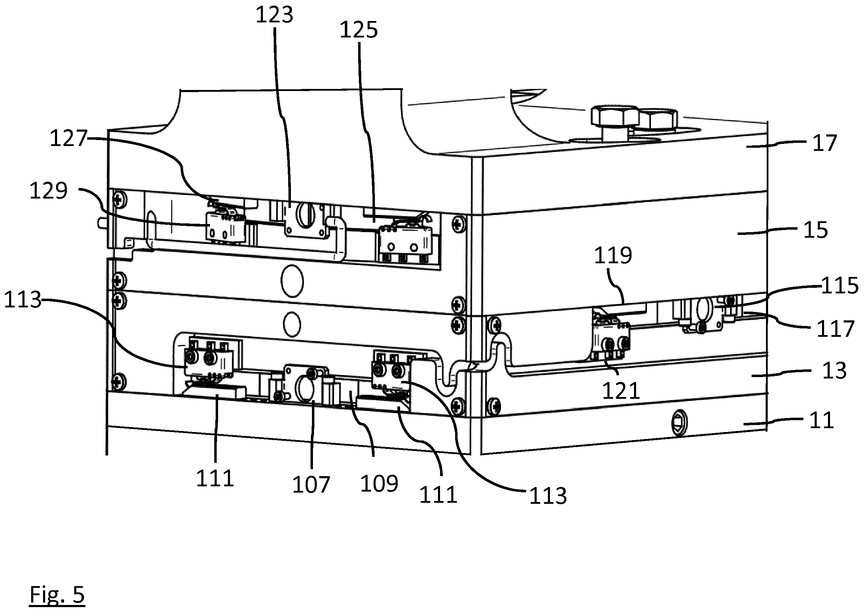

Schließlich ist aus Figur 5 zu erkennen, dass an dem zweiten Modul 7 und genauer an dem zweiten Plattenelement 11 ein erster Sensor 107 vorgesehen ist, der mit einem Messband 109 zusammenwirkt, das fest an dem dritten Modul 13 befestigt ist, sodass eine Bewegung des dritten Moduls 13 relativ zu dem zweiten Modul 7 mit dem ersten Sensor 107 erfasst werden kann. Darüber hinaus weist das zweite Plattenelement 11 Rampen 111 auf, die mit Endschaltern 113 am dritten Modul 13 zusammenwirken, sodass der Drehantrieb, der mit der zweiten Gewindespindel 67 gekoppelt ist, dann abgeschaltet wird, wenn einer der Endschalter 113 geschlossen wird. Damit kann der motorisch einstellbare Bereich für ein Verfahren des dritten Moduls 13 in y-Richtung elektronisch begrenzt werden.

Ein ähnlicher Aufbau ist an dem vierten Modul 15 vorgesehen, wobei dieses einen zweiten Sensor 115, der an dem vierten Modul 15 fest angebracht ist und mit einem fest an dem dritten Modul 13 angebrachten Messband 117 zusammenwirkt, um die Position des vierten Moduls 15 relativ zu dem dritten Modul 13 in x-Richtung zu erfassen. Darüber hinaus sind an dem vierten Modul 15 wiederum Rampen 119 vorgesehen, die mit Endschaltern 121 am dritten Modul 13 zusammenwirken, um den Drehantrieb 87 abzuschalten, wenn die Grenzen dieses Verfahrbereichs in x-Richtung überschritten oder erreicht sind.

Am Kopplungsmodul 17 ist schließlich ein dritter Sensor 123 angebracht, der mit einem dritten Messband 12 am vierten Modul 15 zusammenwirkt, um elektronisch die relative Position in Drehrichtung um die z-Richtung des Kopplungsmoduls 17 relativ zu dem vierten Modul 15 zu erfassen. Auch zwischen dem vierten Modul 15 und dem Kopplungsmodul 17 ist eine Anordnung aus Rampen 127 und Endschaltern 129 vorgesehen, sodass auch hier verhindert wird, dass eine Drehung über den gewünschten Bereich hinaus mittels eines Drehantriebes erfolgen kann.

Zunächst wird bei dem erfindungsgemäßen Ausführungsbeispiel erreicht, dass ein modularer Aufbau verwirklicht wird. Insbesondere kann die Anordnung der ersten, zweiten, dritten und vierten Paare auch in einer von dem Ausführungsbeispiel abweichenden Reihenfolge entlang der z-Richtung erfolgen, ohne dass dies die Funktion beeinträchtigt.

Bei dem Ausführungsbeispiel einer erfindungsgemäßen Positioniereinrichtung wird außerdem ein kompakter Aufbau erreicht, der hohe Lasten aufnehmen kann. Insbesondere haben die in z-Richtung wirkenden Kräfte keinen direkten Einfluss auf die Verstellung in x- und y-Richtung. Darüber hinaus sind durch die flächige Anlage der Module 5, 7, 13, 15, 17 die Bewegungen in x- und y-Richtung so geführt, dass eine hohe Präzision erreicht werden kann. Auch die entgegen der Lasten wirkende Verstellung in z-Richtung kann zuverlässig und mit hoher Genauigkeit erfolgen.

Schließlich lässt der Aufbau zu, dass alle Antriebe oder Drehantriebe an derselben Seite angebracht werden, was es nicht erforderlich macht, dass die erfindungsgemäße Positioniereinrichtung von mehreren Seiten zugänglich sein muss. Das wiederum reduziert den Platzbedarf für die erfindungsgemäße Positioniereinrichtung.

### Bezugszeichen

- 1: Positioniereinrichtung
- 3: Fokussiereinrichtung
- 5: Basismodul
- 7: zweites Modul
- 9: erstes Plattenelement
- 11: zweites Plattenelement
- 13: drittes Modul
- 15: viertes Modul
- 17: Kopplungsmodul
- 19: Stempel
- 21: Kragen
- 23: Gehäuseabschnitt
- 25: Stufe
- 27: Federelement
- 29: Schrägfläche
- 31: Positionierstempel
- 33: Schrägfläche
- 35: erste Gewindespindeln
- 37: Eingriffselement
- 39: Drehantrieb
- 41: Getriebegehäuse
- 43: Schrittmotor
- 45: Druckplatte
- 47: Hülse
- 49: Tellerfederpaket
- 51: Mutter
- 53: Bolzen
- 55: Vertiefung
- 57: Aufnahmeplatte
- 59: Führungselement
- 61: erste Führungsbahn
- 63: erster Führungsblock
- 65: zweite Führungsbahn
- 67: zweite Gewindespindel
- 69: Eingriffselement
- 71: dritte Führungsbahn
- 73: zweiter Führungsblock
- 75: Gewindebohrung
- 77: dritte Gewindespindel
- 79: Eingriffselement
- 81: Getriebe
- 83: Schrittmotor
- 85: Getriebegehäuse
- 87: Drehantrieb
- 89: Führungselement
- 91: Drehzapfen
- 93: Aussparung
- 95: vierte Führungsbahn
- 97: dritter Führungsblock
- 99: vierte Gewindespindel
- 101: Eingriffselement
- 103: Führungsschlitz
- 105: Bolzen
- 106: Bolzen
- 107: erster Sensor
- 109: erstes Messband
- 111: Rampe
- 113: Endschalter
- 115: zweiter Sensor
- 117: zweites Messband
- 119: Rampe
- 121: Endschalter
- 123: dritter Sensor
- 125: drittes Messband
- 127: Rampe
- 129: Endschalter

## Patentansprüche

1. Positioniereinrichtung (1) mit
fünf Modulen (5, 7, 13, 15, 17),
wobei sich die Module (5, 7, 13, 15, 17) in parallel zueinander verlaufenden Modulebenen erstrecken,
wobei sich eine x-Richtung und eine y-Richtung senkrecht zueinander in den Modulebenen erstrecken und sich eine z-Richtung senkrecht zu den Modulebenen erstreckt,
wobei die Module (5, 7, 13, 15, 17) in z-Richtung übereinander angeordnet sind,
wobei ein erstes Paar aus Modulen (5, 7), die sich unmittelbar aneinander abstützen, direkt derart beweglich miteinander gekoppelt sind, sodass das erste Modul (5) aus dem ersten Paar gegenüber dem zweiten Modul (7) aus dem ersten Paar entlang dreier parallel zur z-Richtung verlaufender und in einem Dreieck angeordneter erster Verstellachsen unabhängig verschoben werden kann,
wobei ein zweites Paar aus Modulen (7, 13), die sich unmittelbar aneinander abstützen, direkt derart beweglich miteinander gekoppelt sind, sodass das erste Modul (7) aus dem zweiten Paar gegenüber dem zweiten Modul (13) aus dem zweiten Paar entlang der y-Richtung verschiebbar ist,
wobei ein drittes Paar aus Modulen (13, 15), die sich unmittelbar aneinander abstützen, direkt derart beweglich miteinander gekoppelt sind, sodass das erste Modul (13) aus dem dritten Paar gegenüber dem zweiten Modul (15) aus dem dritten Paar entlang der x-Richtung verschiebbar ist,
wobei ein viertes Paar aus Modulen (15, 17), die sich unmittelbar aneinander abstützen, direkt derart beweglich miteinander gekoppelt sind, sodass das erste Modul (15) aus dem vierten Paar gegenüber dem zweiten Modul (17) aus dem vierten Paar um die z-Achse verschwenkbar ist, und
wobei die Paare aus Modulen sich voneinander unterscheiden.

2. Positioniereinrichtung (1) nach Anspruch 1, wobei an dem ersten Modul (7) aus dem ersten Paar drei sich in z-Richtung erstreckende, bezüglich des ersten Moduls aus dem ersten Paar entlang der z-Richtung verstellbare Stempel (19) vorgesehen sind, die sich am zweiten Modul (5) des ersten Paares abstützen.

3. Positioniereinrichtung (1) nach Anspruch 2, wobei in dem ersten Modul (7) aus dem ersten Paar drei sich in der Modulebene in einer Erstreckungsrichtung erstreckende Positionierstempel (31) vorgesehen sind, die in der Modulebene entlang ihrer Erstreckungsrichtung verstellbar sind,
wobei jedem Positionierstempel (31) ein Stempel (19) zugeordnet ist, sodass drei Paare aus einem Stempel (19) und einem Positionierstempel (31) gebildet werden, und
wobei Enden des Positionierstempels (31) und des Stempels (19) aus einem Paar aneinander anliegen und die anliegenden Enden zur Erstreckungsrichtung des Positionierstempels (31) und des Stempels (19) geneigte Schrägflächen (29, 33) aufweisen.

4. Positioniereinrichtung (1) nach Anspruch 3, wobei erste Gewindespindeln (35) vorgesehen sind und jeder Positionierstempel (31) mit einer sich parallel zu der Erstreckungsrichtung des Positionierstempels (31) erstreckenden ersten Gewindespindel (35) eingreift.

5. Positioniereinrichtung (1) nach Anspruch 4, wobei eine oder mehrere der ersten Gewindespindeln (35) mit einem Drehantrieb (39) gekoppelt sind, die an dem ersten Modul (7) des ersten Paares gehaltert sind.

6. Positioniereinrichtung (1) nach einem oder mehreren der Ansprüche 3 bis 5, wobei sich die Positionierstempel (31) parallel zueinander entlang der x-Richtung erstrecken.

7. Positioniereinrichtung (1) nach einem oder mehreren der Ansprüche 1 bis 6, wobei das erste Modul (7) aus dem zweiten Paar eine sich parallel zu oder in einem Winkel kleiner 90° zu der y-Richtung erstreckende erste Führungsbahn (61) aufweist,
wobei in der ersten Führungsbahn (61) ein erster Führungsblock (63) verschiebblich geführt ist,
wobei der erste Führungsblock (63) in einer zweiten Führungsbahn (65) geführt ist, die in dem zweiten Modul (13) des zweiten Paares ausgebildet ist und die senkrecht zu oder in einem Winkel größer als 0° zu der y-Richtung verläuft, und
wobei Antriebsmittel (67, 69) zur Bewegung des ersten Führungsblocks (63) entlang der zweiten Führungsbahn (65) vorgesehen sind.

8. Positioniereinrichtung (1) nach Anspruch 7, wobei eine zweite Gewindespindel (67) vorgesehen ist, die sich in dem zweiten Modul (13) des zweiten Paares in der Modulebene parallel zur Erstreckungsrichtung der zweiten Führungsbahn (65) erstreckt und die mit dem ersten Führungsblock (63) in Gewindeeingriff steht.

9. Positioniereinrichtung (1) nach einem der Ansprüche 7 oder 8, wobei die zweite Gewindespindel (67) mit einem Drehantrieb gekoppelt ist, der an dem zweiten Modul (13) des zweiten Paares gehaltert ist.

10. Positioniereinrichtung (1) nach einem oder mehreren der Ansprüche 1 bis 9, wobei das erste Modul (13) aus dem dritten Paar eine sich parallel zu der x-Richtung erstreckende dritte Führungsbahn (71) aufweist,
wobei in der dritten Führungsbahn (71) ein zweiter Führungsblock (73) verschiebblich geführt ist,
wobei der zweite Führungsblock (73) mit dem zweiten Modul (15) des dritten Paares eingreift und
wobei Antriebsmittel (77, 79, 81, 83, 87) zur Bewegung des zweiten Führungsblocks (73) entlang der dritten Führungsbahn (71) vorgesehen sind.

11. Positioniereinrichtung (1) nach Anspruch 10, wobei eine dritte Gewindespindel (77) vorgesehen ist, die sich in dem ersten Modul (13) des dritten Paares in der Modulebene parallel zur Erstreckungsrichtung der dritten Führungsbahn (71) erstreckt und die mit dem zweiten Führungsblock (73) in Gewindeeingriff steht.

12. Positioniereinrichtung (1) nach Anspruch 11, wobei die dritte Gewindespindel (77) mit einem Drehantrieb (87) gekoppelt ist, der an dem ersten Modul (13) des dritten Paares gehaltert ist.

13. Positioniereinrichtung (1) nach einem oder mehreren der Ansprüche 1 bis 12, wobei das erste Modul (15) des vierten Paares mit dem zweiten Modul (17) des vierten Paares um eine parallel zur z-Richtung verlaufende Schwenkachse schwenkbar verbunden sind,
wobei das erste Modul (15) des vierten Paares eine sich gradlinig erstreckende vierte Führungsbahn (95) aufweist, die in der x-Richtung und der y-Richtung von der Schwenkachse beabstandet ist und in der ein dritter Führungsblock (97) verschieblich geführt ist,
wobei der dritte Führungsblock (97) mit dem zweiten Modul (17) des vierten Paares eingreift und
wobei Antriebsmittel (99, 101) zur Bewegung des dritten Führungsblocks (97) entlang der vierten Führungsbahn (95) vorgesehen sind.

14. Positioniereinrichtung nach Anspruch 13, wobei eine vierte Gewindespindel (99) vorgesehen ist, die sich in dem ersten Modul (15) des vierten Paares in der Modulebene parallel zur Erstreckungsrichtung der vierten Führungsbahn (95) erstreckt und die mit dem dritten Führungsblock (97) in Gewindeeingriff steht.

15. Positioniereinrichtung nach Anspruch 14, wobei die vierte Gewindespindel (99) mit einem Drehantrieb gekoppelt ist, der an dem ersten Modul des vierten Paares gehaltert ist.

## Claims

1. Positioning device (1) having
five modules (5, 7, 13, 15, 17),
wherein the modules (5, 7, 13, 15, 17) extend in module planes which run parallel to one another,
wherein an x direction and a y direction extend perpendicular to one another in the module planes and a z direction extends perpendicularly to the module planes,
wherein the modules (5, 7, 13, 15, 17) are arranged above one another in the z direction,
wherein a first pair of modules (5, 7) which are directly supported on one another are movably coupled to one another directly in such a way that the first module (5) of the first pair can be independently displaced with respect to the second module (7) of the first pair along three first adjustment axes which run parallel to the z direction and which are arranged in a triangle,
wherein a second pair of modules (7, 13) which are directly supported on one another are movably coupled to one another directly in such a way that the first module (7) of the second pair can be displaced with respect to the second module (13) of the second pair along the y direction,
wherein a third pair of modules (13, 15) which are directly supported on one another are movably coupled to one another directly in such a way that the first module (13) of the third pair can be displaced with respect to the second module (15) of the third pair along the x direction,
wherein a fourth pair of modules (15, 17) which are directly supported on one another are movably coupled to one another directly in such a way that the first module (15) of the fourth pair can be pivoted with respect to the second module (17) of the fourth pair about the z axis, and
wherein the pairs of modules are different from one another.

2. Positioning device (1) according to Claim 1, wherein three rams (19) which extend in the z direction, are adjustable with respect to the first module of the first pair along the z direction and are supported on the second module (5) of the first pair are provided on the first module (7) of the first pair.

3. Positioning device (1) according to Claim 2, wherein three positioning rams (31) which extend in the module plane in a direction of extent and which are adjustable in the module plane along its direction of extent are provided in the first module (7) of the first pair,
wherein each positioning ram (31) is assigned a ram (19) such that three pairs consisting of a ram (19) and a positioning ram (31) are formed, and
wherein ends of the positioning ram (31) and of the ram (19) of a pair butt against one another, and the abutting ends have oblique surfaces (29, 33) which are inclined with respect to the direction of extent of the positioning ram (31) and of the ram (19).

4. Positioning device (1) according to Claim 3, wherein first threaded spindles (35) are provided and each positioning ram (31) engages with a first threaded spindle (35) which extends parallel to the direction of extent of the positioning ram (31).

5. Positioning device (1) according to Claim 4, wherein one or more of the first threaded spindles (35) are coupled to a rotary drive (39) which is held on the first module (7) of the first pair.

6. Positioning device (1) according to one or more of Claims 3 to 5, wherein the positioning rams (31) extend parallel to one another along the x direction.

7. Positioning device (1) according to one or more of Claims 1 to 6, wherein the first module (7) of the second pair has a first guide path (61) which extends parallel to or at an angle of less than 90° to the y direction,
wherein a first guide block (63) is displaceably guided in the first guide path (61),
wherein the first guide block (63) is guided in a second guide path (65) which is formed in the second module (13) of the second pair and which runs perpendicularly to or at an angle of greater than 0° to the y direction, and
wherein drive means (67, 69) are provided for moving the first guide rod (63) along the second guide path (65) .

8. Positioning device (1) according to Claim 7, wherein a second threaded spindle (67) is provided which extends in the second module (13) of the second pair in the module plane parallel to the direction of extent of the second guide path (65) and which is in threaded engagement with the first guide block (63) .

9. Positioning device (1) according to either of Claims 7 and 8, wherein the second threaded spindle (67) is coupled to a rotary drive which is held on the second module (13) of the second pair.

10. Positioning device (1) according to one or more of Claims 1 to 9, wherein the first module (13) of the third pair has a third guide path (71) which extends parallel to the x direction,
wherein a second guide block (73) is displaceably guided in the third guide path (71),
wherein the second guide block (73) engages with the second module (15) of the third pair, and
wherein drive means (77, 79, 81, 83, 87) are provided for moving the second guide block (73) along the third guide path (71).

11. Positioning device (1) according to Claim 10, wherein a third threaded spindle (77) is provided which extends in the first module (13) of the third pair in the module plane parallel to the direction of extent of the third guide path (71) and which is in threaded engagement with the second guide block (73) .

12. Positioning device (1) according to Claim 11, wherein the third threaded spindle (77) is coupled to a rotary drive (87) which is held on the first module (13) of the third pair.

13. Positioning device (1) according to one or more of Claims 1 to 12, wherein the first module (15) of the fourth pair is connected to the second module (17) of the fourth pair so as to be pivotable about a pivot axis running parallel to the z direction,
wherein the first module (15) of the fourth pair has a rectilinearly extending fourth guide path (95) which is spaced apart from the pivot axis in the x direction and in the y direction and in which a third guide block (97) is displaceably guided,
wherein the third guide block (97) engages with the second module (17) of the fourth pair, and
wherein drive means (99, 101) are provided for moving the third guide block (97) along the fourth guide path (95).

14. Positioning device according to Claim 13, wherein a fourth threaded spindle (99) is provided which extends in the first module (15) of the fourth pair in the module plane parallel to the direction of extent of the fourth guide path (95) and which is in threaded engagement with the third guide block (97) .

15. Positioning device according to Claim 14, wherein the fourth threaded spindle (99) is coupled to a rotary drive which is held on the first module of the fourth pair.

## Revendications

1. Dispositif de positionnement (1) comprenant cinq modules (5, 7, 13, 15, 17),
les modules (5, 7, 13, 15, 17) s'étendant en niveaux de module parallèles entre eux,
une direction x et une direction y s'étendant perpendiculairement l'une à l'autre dans les plans de modules et une direction z s'étendant perpendiculairement aux plans de modules,
les modules (5, 7, 13, 15, 17) étant disposés les uns au-dessus des autres dans la direction z,
une première paire de modules (5, 7), qui sont directement en appui l'un sur l'autres, étant directement accouplés de manière mobile l'un à l'autre de telle sorte que le premier module (5) de la première paire puisse coulisser indépendamment par rapport au deuxième module (7) de la première paire le long de trois premiers axes de déplacement s'étendant parallèlement à la direction z et disposés en triangle,
une deuxième paire de modules (7, 13), qui sont directement en appui l'un sur l'autre, étant directement accouplés de manière mobile l'un à l'autre de telle sorte que le premier module (7) de la deuxième paire puisse coulisser par rapport au deuxième module (13) de la deuxième paire le long de la direction y,
une troisième paire de modules (13, 15), qui sont directement en appui l'un sur l'autre, étant directement accouplés de manière mobile l'un à l'autre de telle sorte que le premier module (13) de la troisième paire puisse coulisser par rapport au deuxième module (15) de la troisième paire le long de la direction x,
une quatrième paire de modules (15, 17), qui sont directement en appui l'un sur l'autre, étant directement accouplés de manière mobile l'un à l'autre de telle sorte que le premier module (15) de la quatrième paire puisse être pivoté par rapport au deuxième module (17) de la quatrième paire sur l'axe z et
les paires de modules différant les unes des autres.

2. Dispositif de positionnement (1) selon la revendication 1, trois poinçons (19), qui s'étendent dans la direction z et qui sont réglables par rapport au premier module de la première paire le long de la direction z, étant prévus au niveau du premier module (7) de la première paire et étant en appui sur le deuxième module (5) de la première paire.

3. Dispositif de positionnement (1) selon la revendication 2, trois poinçons de positionnement (31), qui s'étendent dans le plan de modules dans une direction d'extension, étant prévus dans le premier module (7) de la première paire et étant réglables dans le plan de modules le long de leur direction d'extension,
un poinçon (19) étant associé à chaque poinçon de positionnement (31) de sorte que trois paires sont formées à partir d'un poinçon (19) et d'un poinçon de positionnement (31), et
des extrémités du poinçon de positionnement (31) et de du poinçon (19) d'une paire venant en appui l'une sur l'autre et les extrémités en appui comportant des surfaces inclinées (29, 33) qui sont inclinées par rapport à la direction d'extension du poinçon de positionnement (31) et du poinçon (19).

4. Dispositif de positionnement (1) selon la revendication 3, des premières broches filetées (35) étant prévues et chaque poinçon de positionnement (31) s'engageant avec une première broche filetée (35) qui s'étend parallèlement à la direction d'extension du poinçon de positionnement (31).

5. Dispositif de positionnement (1) selon la revendication 4, une ou plusieurs des premières broches filetées (35) étant accouplées à un entraînement en rotation (39) qui est supporté par le premier module (7) de la première paire.

6. Dispositif de positionnement (1) selon une ou plusieurs des revendications 3 à 5, les poinçons de positionnement (31) s'étendant parallèlement les uns aux autres selon la direction x.

7. Dispositif de positionnement (1) selon une ou plusieurs des revendications 1 à 6, le premier module (7) de la deuxième paire comportant une première piste de guidage (61) qui s'étend parallèlement à la direction y ou suivant un angle inférieur à 90° par rapport à celle-ci,
un premier bloc de guidage (63) étant guidé de manière coulissante dans la première piste de guidage (61),
le premier bloc de guidage (63) étant guidé dans une deuxième piste de guidage (65) qui est formée dans le deuxième module (13) de la deuxième paire et qui s'étend perpendiculairement à la direction y ou suivant un angle supérieur à 0° par rapport à celle-ci, et
des moyens d'entraînement (67, 69) étant prévus pour déplacer le premier bloc de guidage (63) le long de la deuxième piste de guidage (65).

8. Dispositif de positionnement (1) selon la revendication 7, une deuxième broche filetée (67) étant prévue qui s'étend dans le plan de modules parallèle à la direction d'extension de la deuxième piste de guidage (65) dans le deuxième module (13) de la deuxième paire et qui est en engrènement avec le premier bloc de guidage (63).

9. Dispositif de positionnement (1) selon l'une des revendications 7 et 8, la deuxième broche filetée (67) étant accouplée à un entraînement en rotation qui est supporté par le deuxième module (13) de la deuxième paire.

10. Dispositif de positionnement (1) selon une ou plusieurs des revendications 1 à 9, le premier module (13) de la troisième paire comportant une troisième piste de guidage (71) qui s'étend parallèlement à la direction x,
un deuxième bloc de guidage (73) étant guidé de manière coulissante dans la troisième piste de guidage (71),
le deuxième bloc de guidage (73) s'engageant avec le deuxième module (15) de la troisième paire et
des moyens d'entraînement (77, 79, 81, 83, 87) étant prévus pour déplacer le deuxième bloc de guidage (73) le long de la troisième piste de guidage (71).

11. Dispositif de positionnement (1) selon la revendication 10, une troisième broche filetée (77) étant prévue qui s'étend dans le plan de modules parallèle à la direction d'extension de la troisième piste de guidage (71) dans le premier module (13) de la troisième paire et qui est en engrènement avec le deuxième bloc de guidage (73).

12. Dispositif de positionnement (1) selon la revendication 11, la troisième broche filetée (77) étant accouplée à un entraînement en rotation (87) qui est supporté par le premier module (13) de la troisième paire.

13. Dispositif de positionnement (1) selon une ou plusieurs des revendications 1 à 12, le premier module (15) de la quatrième paire étant relié au deuxième module (17) de la quatrième paire de manière pivotante sur un axe de pivotement parallèle à la direction z,
le premier module (15) de la quatrième paire comportant une quatrième piste de guidage (95) qui s'étend de manière rectiligne, qui est espacée de l'axe de pivotement dans la direction x et la direction y et dans laquelle un troisième bloc de guidage (97) est guidé de manière coulissante,
le troisième bloc de guidage (97) s'engageant avec le deuxième module (17) de la quatrième paire et
des moyens d'entraînement (99, 101) étant prévus pour déplacer le troisième bloc de guidage (97) le long de la quatrième piste de guidage (95).

14. Dispositif de positionnement selon la revendication 13, une quatrième broche filetée (99) étant prévue qui s'étend dans le plan du module parallèle à la direction d'extension de la quatrième piste de guidage (95) dans le premier module (15) de la quatrième paire et qui est en engrènement avec le troisième bloc de guidage (97).

15. Dispositif de positionnement selon la revendication 14, la quatrième broche filetée (99) étant accouplée à un entraînement en rotation qui est supporté par le premier module de la quatrième paire.
